# EUROPEAN PATENT SPECIFICATION

(11) **EP 1 075 499 B1**
(45) Date of publication and mention of the grant of the patent: **04.06.2003**
(21) Application number: 99909956.7
(22) Date of filing: 10.03.1999
(51) Int. Cl.: C08L 71/12, C08L 77/00, C08K 5/092

(54) **METHOD FOR REDUCING THE RELEASE FORCE OF COMPATIBILIZED POLYPHENYLENE ETHER-POLYAMIDE RESIN BLENDS**
VERFAHREN ZUM VERMINDERN DER ENTFORMUNGSKRAFT VON KOMPATIBILISIERTE POLYPHENYLENETHER-POLYAMID ZUSAMMENSETZUNGEN
PROCEDE DE REDUCTION DE LA FORCE DE DECOLLEMENT DE MELANGES DE RESINES ETHER DE POLYPHENYLENE-POLYAMIDE COMPATIBLES

(30) Priority: 22.04.1998 US 64270
(43) Date of publication of application: 14.02.2001
(73) Proprietor: GENERAL ELECTRIC COMPANY, Schenectady, NY 12345 (US)
(72) Inventor: MAJUMDAR, Biswaroop, Delmar, NY 12054 (US); GROSS, Michael, Albany, NY 12203 (US)
(74) Representative: Szary, Anne Catherine, Dr.
(86) International application number: US9905280
(87) International publication number: WO99054404

(56) References cited:
- EP-A- 0 597 648
- EP-A- 0 602 945
- WO-A-85/05372
- US-A- 5 109 065

## Description

The invention relates to a method for reducing the release force of articles made from an impact modified composition of a compatibilized polyphenylene ether-polyamide resin blend.

The invention also relates to the compositions and articles formed out of the compositions made by the method of the invention.

Poly(phenylene ether) resins (referred to hereafter as "PPE") are commercially attractive materials because of their unique combination of physical, chemical, and electrical properties. Furthermore, the combination of these resins with polyamide resins into compatibilized blends results in additional overall properties such as chemical resistance, high strength, and high flow. Examples of such compatibilized blends can be found in U.S. Patents 4,315,086 (Ueno, et al); 4,659,760 (van der Meer); and 4,732,938 (Grant, et al). The properties of these blends can be further enhanced by the addition of various additives such as impact modifiers, flame retardants, light stabilizers, processing stabilizers, heat stabilizers, antioxidants and fillers.

The physical properties of PPE/polyamide blends make them attractive for a variety of end-use articles in the automotive market, especially for under hood and various exterior components. Many of these components are subjected to a variety of abuses such as impacts and as such require outstanding impact resistance and ductility. Moreover, many of these same articles are preferentially produced using conversion techniques such as injection molding. Some of the desirable applications, for example, connectors have very thin wall sections and therefore require resins that require very little release pressure to eject the part from the tool in order to avoid distortion of the part. The same resins must also have outstanding ductility, flow, and surface appearance. Conventional PPE/polyamide blends have an inadequate balance of properties to widely penetrate many potential markets.

It is therefore apparent that a need continues to exist for PPE/polyamide compositions that have reduced release force yet retain the other attractive physical properties.

The needs discussed above have been generally satisfied by the discovery of an improved method for reducing the release force of articles formed from a compatibilized PPE/polyamide composition, wherein the method comprises:
(a) melt-mixing in a first step:
(b) from 10 to less than 30% by weight polyphenylene ether resin;
(c) from 0.7% to 1.1% by weight of a non-polymeric aliphatic polycarboxylic acid or derivative thereof, preferably, citric acid or a hydrate of citric acid;
(d) from 1% to 15% by weight of at least one elastomeric block copolymer, wherein the elastomeric block copolymer is a mixture of a di-block copolymer and tri-block copolymer, wherein the copolymer comprises a polyarylene block and a saturated or unsaturated rubber block,
(e) from 1% to 15% by weight of a functionalized elastomeric olefin; and
(f) optionally, from 0 to 20% by weight of a polyamide resin, and
(g) further melt mixing in a second step, from 15% to about 85% by weight of a polyamide resin;
wherein the total weight of the polyamide resin is from 35% to 85% by weight based on the total weight of the composition.

In a first preferred embodiment of the present invention, the PPE level is between 10% and 30% by weight, the non-polymeric polycarboxylic acid level is between 0.8% and 1.0% by weight, the elastomeric block copolymer is present from 1% to 8% by weight, wherein elastomeric block copolymer contains a polystyrene-poly(ethylene-butylene)-polystyrene triblock copolymer, a polystyrene-poly(ethylene-propylene) diblock copolymer, or a mixture of a polystyrene-poly(ethylene-butylene)-polystyrene triblock copolymer and a polystyrene-poly(ethylene-propylene) diblock copolymer, the functionalized elastomeric olefin level is between 1% and 8% by weight, and the polyamide is present at a level between 35% and 85% by weight.

In a second preferred embodiment of the present invention, between 10% and 15% of the polyamide resin is added with the PPE, the non-polymeric polycarboxylic acid, the elastomeric block copolymer component, and the functionalized elastomeric olefin, with the remainder of the polyamide resin added in a second step; wherein all weight percentages are based on the total weight of the composition.

In a third preferred embodiment of the present invention, the functionalized elastomeric olefin is derived from ethylene and at least one C₃₋₈ 1-olefin.

In a fourth preferred embodiment of the present invention, the functionalized elastomeric olefin is derived from an ethylene-propylene resin or ethylene-propylene-diene resin.

In a fifth preferred embodiment of the present invention, the functionalized elastomeric olefin is an ethylene-propylene resin functionalized with maleic anhydride or ethylene-propylene-diene resin functionalized with maleic anhydride.

In a sixth preferred embodiment of the present invention, the PPE level is between 10% and 30% by weight, the citric acid level is between 0.8% and 1.0% by weight, the elastomeric block copolymer component is present from 1% to 8% by weight,
wherein elastomeric block copolymer component contains a mixture of a polystyrene-poly(ethylene-butylene)-polystyrene triblock copolymer and polystyrene-poly(ethylene-propylene) diblock copolymer, the functionalized elastomeric olefin is an ethylene-propylene resin or ethylene-propylene-diene resin functionalized with maleic anhydride the functionalized elastomeric olefin is present at a level between 1% and 8% by weight, and the polyamide is present at a level between 35% and 85% by weight.

In a seventh preferred embodiment of the present invention, the ejector force is at least 50% less than the same composition not containing the functionalized elastomeric olefin.

The description which follows provides further details regarding this invention.

PPE, per se, are known polymers comprising a plurality of structural units of the formula (I): 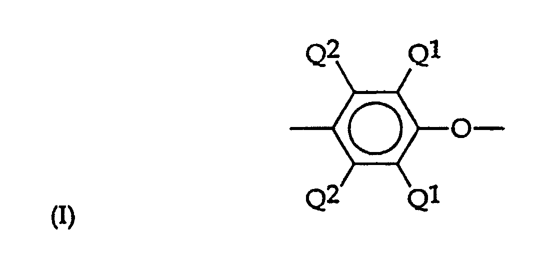 wherein for each structural unit, each Q¹ is independently halogen, primary or secondary lower alkyl (e.g., alkyl containing up to 7 carbon atoms), phenyl, haloalkyl, aminoalkyl, hydrocarbonoxy or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Preferably, each Q¹ is alkyl or phenyl, especially C₁₋₄ alkyl, and each Q² is hydrogen.

Both homopolymer and copolymer PPE are included. The preferred homopolymers are those containing 2,6-dimethyl-1,4 phenylene ether units. Suitable copolymers include random copolymers containing, for example, such units in combination with 2,3,6-trimethyl-1,4-phenylene ether units. Also included are PPE containing moieties prepared by grafting vinyl monomers or polymers such as polystyrenes, as well as coupled PPE in which coupling agents such as low molecular weight polycarbonates, quinones, heterocycles and formals undergo reaction in known manner with the hydroxy groups of two PPE chains to produce a higher molecular weight polymer, provided a substantial proportion of free OH groups remains.

The PPE generally has a number average molecular weight within the range of 3,000-40,000 and a weight average molecular weight within the range of 20,000-80,000, as determined by gel permeation chromatography. Its intrinsic viscosity is most often in the range of 0.15-0.6 dl./g., as measured in chloroform at 25°C.

The PPE are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Particularly useful PPE for many purposes are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A substantial proportion of the polymer molecules, typically constituting as much as about 90% by weight of the polymer, may contain at least one of said aminoalkyl-containing and 4-hydroxybiphenyl end groups.

It will be apparent to those skilled in the art from the foregoing that the PPE contemplated for use in the present invention include all those presently known, irrespective of variations in structural units or ancillary chemical features.

The polyamide resins useful in the practice of the present invention are a generic family of resins known as nylons, characterized by the presence of an amide group (-C(O)NH-). Nylon-6 and nylon-6,6 are the generally preferred polyamides and are available from a variety of commercial sources. Other polyamides, however, such as nylon-4,6, nylon-12, nylon-6,10, nylon 6,9, nylon 6/6T and nylon 6,6/6T with triamine contents below about 0.5 weight percent as well as others, such as the amorphous nylons may be useful for particular PPE-polyamide applications. Mixtures of various polyamides as well as various polyamide copolymers are also useful. The most preferred polyamides for the blends of the present invention are nylon-6 and nylon-6,6. Branched polyamide resins are also useful as are mixtures of branched and linear polyamide resins.

The polyamides can be obtained by a number of well-known processes such as those described in U.S. Patent Nos. 2,071,250; 2,071,251; 2,130,523; 2,130,948; 2,241,322; 2,312,966; and 2,512,606. Nylon-6, for example, is a polymerization product of caprolactam. Nylon-6,6 is a condensation product of adipic acid and 1,6-diaminohexane. Likewise, nylon 4,6 is a condensation product between adipic acid and 1,4-diaminobutane. Besides adipic acid, other useful diacids for the preparation of nylons include azelaic acid, sebacic acid, dodecane diacid, as well terephthalic and isophthalic acids. Other useful diamines include m-xylyene diamine, di-(4-aminophenyl)methane, di-(4-aminocyclohexyl)methane; 2,2-di-(4-aminophenyl)propane, and 2,2-di-(4-aminocyclohexyl)propane. Copolymers of caprolactam with diacids and diamines are also useful.

In one embodiment of the invention, polyamides having viscosity number of 90 to 350 ml/g, preferably between 110 and 240 ml/g as measured in a 0.5 weight percent solution in 96 weight percent sulphuric acid in accordance with ISO 307 is preferred. In another preferred embodiment of the present invention, it is preferred that the amine endgroup to acid endgroup ratio (i.e., -NH₂/-CO₂H) be < 1.0.

The amount of the PPE and polyamide used in the present invention can vary widely depending on the properties desired. Generally, the amounts are such that the polyamide remains the continuous phase with the other components dispersed within the polyamide and/or each other. Useful amounts of polyamide range between 35% and 85% by weight based on the weight of the entire composition. For applications wherein a lower viscosity is an important factor, higher levels of polyamide, e.g., from 50% to 85% by weight based on the entire weight of the composition, are typically used. Conversely, for applications wherein dimensional stability is key, lower levels of polyamide, e.g., from 35% to 50% by weight based on the entire weight of the composition, are typically used. An exact amount of polyamide can be readily determined without under experimentation by one of ordinary skill in this art.

In the method of the present invention, a compatibilizing agent should be employed in the preparation of the composition. The two-fold purpose for using a compatilizing agent is to improve, in general, the physical properties of the PPE-polyamide resin blend, as well as to enable the use of a greater proportion of the polyamide component. When used herein, the expression "compatibilizing agent" refers to those polyfunctional compounds which interact with either the PPE, the polyamide resin, or both. This interaction may be chemical (e.g. grafting) or physical (e.g. affecting the surface characteristics of the dispersed phases). In either instance the resulting PPE-polyamide composition appears to exhibit improved compatibility, particularly as evidenced by enhanced impact strength, mold knit line strength and/ or elongation. As used herein, the expression "compatibilized polyphenylene ether-polyamide base resin" refers to those compositions which have been physically or chemically compatibilized with an agent as discussed above, as well as those compositions which are physically compatible without such agents, as taught in U.S. Pat. No. 3,379,792.

In the practice of the present invention, non-polymeric aliphatic polycarboxylic acids are used as the compatibilizing agent. Included in the group of non-polymeric aliphatic polycarboxylic acids species, also known as compatibilizers or functionalizers, are, for example, the aliphatic polycarboxylic acids, and acid esters represented by the formula (II):

(II) (R^{I}O)ₘR(COOR^{II})ₙ(CONR^{III}R^{IV})ₛ

wherein R is a linear or branched chain, saturated aliphatic hydrocarbon of from 2 to 20, preferably 2 to 10, carbon atoms; each R^{I} is selected from the group consisting of hydrogen or an alkyl, aryl, acyl, or carbonyl dioxy group of 1 to 10, preferably 1 to 6, most preferably 1 to 4, carbon atoms, with hydrogen being especially preferred; each R^{II} is independently selected from the group consisting of hydrogen or an alkyl or aryl group of from 1 to 20 carbon atoms preferably from 1 to 10 carbon atoms; each R^{III} and R^{IV} is independently selected from the group consisting essentially of hydrogen or an alkyl or aryl group of from 1 to 10, preferably from 1 to 6, most preferably 1 to 4, carbon atoms; m is equal to 1 and (n+s) is greater than or equal to 2, preferably equal to 2 or 3, and n and s are each greater than or equal to zero; and wherein (OR¹) is alpha or beta to a carbonyl group and at least two carbonyl groups are separated by 2 to 6 carbon atoms. Obviously, R^{I}, R^{II}, R^{III}, and R^{IV} cannot be aryl when the respective substituent has less than 6 carbon atoms.

Illustrative of suitable polycarboxylic acids are citric acid, malic acid, and agaricic acid; including the various commercial forms thereof, such as, for example, the anhydrous and hydrated acids. Illustrative acid esters useful herein include, for example, acetyl citrate and mono- and/or di- stearyl citrates and the like. Suitable acid amides useful herein include, for example, N,N'-diethyl citric acid amide; N,N'-dipropyl citric acid amide; N-phenyl citric acid amide; N-dodecyl citric acid amide; N,N'-didodecyl citric acid amide and N-dodecyl malic acid amide. Derivatives of the foregoing polycarboxylic acids are also suitable for use in the practice of the present invention. Examples of suitable functionalizing compounds can be found in U.S. Patent Nos. 4,315,086, 4,755,566, 4,873,286 and 5,000,897.

The amount of the above mentioned non-polymeric aliphatic polycarboxylic acids that is required to appropriately functionalize the PPE is that which is sufficient to improve the compatibility between the various components in the composition and improve the surface characteristics of the composition without loss of desirable properties such as, for example, impact properties, tensile properties, surface appearance, and the like. As previously discussed, indications of improved compatibility include resistance to lamination, improved physical properties such as increased tensile and impact properties and a stabilized morphology between the blend component phases under static and/or low shear conditions.

It is thought that reactions can occur between some of the components of the composition, for example, between the PPE and the non-polymeric aliphatic polycarboxylic acids, the non-polymeric aliphatic polycarboxylic acids and the polyamide resin, or between the PPE, non-polymeric aliphatic polycarboxylic acid, and the polyamide resin. These reactions are thought to lead to various copolymers between the components of the blend. In this manner, as the non-polymeric aliphatic polycarboxylic acid is added to a PPE/polyamide composition, the average particle size of the dispersed PPE phase decreases presumably due to the formation of the copolymer structures. It is believed that a reduction in the number of PPE particles, in the formed articles, having an average particle diameter of about 10 microns or greater is responsible for the improvement in the overall surface appearance. There appears to be a minimum threshold level of non-polymeric aliphatic polycarboxylic acid that is required to achieve the desired compatibility between the PPE and the polyamide as indicated by enhanced physical properties yet which results in sufficient numbers of relatively larger PPE particles that lead to surface imperfections. An increase in the level of non-polymeric aliphatic polycarboxylic acid above the minimum has a positive effect on enhancing the compatibility but unexpectedly has been discovered to have a significant effect on improving the surface characteristics of the blend.

In the practice of the present invention; an effective amount of the above mentioned non-polymeric aliphatic polycarboxylic acids, based on the total weight of the composition, is from 0.7% to 1.1% by weight. Amounts less than 07.% by weight result sufficient numbers of PPE particles having an average diameter greater than about 10 µm (microns) such that an article formed from a sheet of the compatibilized PPE/polyamide composition has unacceptable surface appearance with respect to pits and grits. Amounts in excess of 1.1% by weight afford increased flow characteristics but at the expense of low temperature impact strength and the color of the composition darkens considerably.

The method according to the invention incorporates in the composition one or more of the so called elastomeric block copolymers, for example, A-B-A triblock copolymers and A-B diblock copolymers. The A-B and A-B-A type block copolymer rubber additives which may be used are thermoplastic rubbers comprised of one or two alkenyl aromatic blocks which are typically styrene blocks and a rubber block, e.g., a butadiene block which may be partially or totally hydrogenated. Mixtures of these triblock copolymers and diblock copolymers are especially preferred in the present compositions.

Suitable A-B and A-B-A type block copolymers are disclosed in, for example, U.S. Patent Nos. 3,078,254, 3,402,159, 3,297,793, 3,265,765, and 3,594,452 and U.K. Patent 1,264,741. Examples of typical species of A-B and A-B-A block copolymers include polystyrene-polybutadiene (SBR), polystyrene-poly(ethylene-propylene), polystyrene-polyisoprene, poly(α-methylstyrene)-polybutadiene, polystyrene-polybutadiene-polystyrene (SBR), polystyrene-poly(ethylene-butylene)-polystyrene, polystyrene-polyisoprene-polystyrene and poly(α-methylstyrene)-polybutadiene-poly(α-methylstyrene), as well as the selectively hydrogenated versions thereof. Mixtures of the aforementioned block copolymers are also useful. Such A-B and A-B-A block copolymers are available commercially from a number of sources, including Phillips Petroleum under the trademark SOLPRENE, Shell Chemical Co., under the trademark KRATON, Dexco under the tradename VECTOR, and Kuraray under the trademark SEPTON.

In the method of the present invention, the functionalized elastomeric polyolefin is an elastomeric polyolefin containing at least one moiety of the group consisting of anhydride, epoxy, oxazoline, and orthoester. The essential structural units of the elastomeric polyolefin are derived from ethylene and at least one C₃₋₈ 1-olefin, such as, propylene, 1-butene, 1-hexene, and 1-octene. The proportions of ethylene and at least one C₃₋₈ 1-olefin are not critical provided that they together constitute the major portion of the polymer.

In a preferred embodiment, the functionalized elastomeric polyolefin is a functionalized ethylene-propylene rubber or a functionalized ethylene-propylene-diene elastomer. The diene portion is at least one non-conjugated diene, such as ethylidene norbornene, 1,4-hexadiene, or dicyclopentadiene. These elastomeric polyolefins are known in the art as EPR and EPDM elastomers.

As previously discussed, the functionalized elastomeric polyolefin is an elastomeric polyolefin containing at least one moiety of the group consisting of anhydride, epoxy, oxazoline, and orthoester. The functionalized elastomeric polyolefins are well-known in the art as are methods for their preparation. Examples of the methods can be found in U.S. Patent Nos. 3,882,194, 3,928,497, 4,147,740, 4,590,241, 4,996,263, 5,124,410, and 5,393, 833, among others.

In an especially preferred embodiment of the invention, the functionalized elastomeric polyolefin is an elastomeric polyolefin containing anhydride moieties. Preferably, the functionalized elastomeric polyolefin is an EPR or EPDM that has been allowed to react with maleic anhydride. The resultant elastomers are commonly referred to EPR-graft-maleic anhydride and EPDM-graft-maleic anhydride. The level of maleic anhydride is generally in the range of between 0.05% and 3% by weight based on the weight of the elastomer.

A useful amount of the elastomeric block copolymers is between 1% and 15% by weight, preferably between 1% and 8% by weight, wherein the weight percentages are based on the entire weight of the composition. In an especially preferred embodiment, the impact modifier comprises a mixture of a polystyrene-poly(ethylene-butylene)-polystyrene triblock copolymer and polystyrene-poly(ethylene-propylene) diblock copolymer. The amount of the functionalized elastomeric olefin level is preferably between 1% and 8% by weight.

Compositions of the present invention can also include effective amounts of at least one additive selected from the group consisting of anti-oxidants, flame retardants, drip retardants, dyes, pigments, colorants, stabilizers, small particle mineral such as clay, mica, and talc, antistatic agents, plasticizers, lubricants, and mixtures thereof. These additives are known in the art, as are their effective levels and methods of incorporation. Effective amounts of the additives vary widely, but they are usually present in an amount up to 50% or more by weight, based on the weight of the entire composition. Especially preferred additives include hindered phenols, thio compounds and amides derived from various fatty acids. The preferred amounts of these additives generally ranges up to 2% total combined weight based on the total weight of the composition.

The preparation of the compositions of the present invention is normally achieved by merely blending the ingredients under conditions for the formation of an intimate blend. Such conditions often include mixing in single or twin screw type extruders or similar mixing devices which can apply a shear to the components.

All of the ingredients may be added initially to the processing system, or else certain additives may be precompounded with one or more of the primary components, preferably the PPE, elastomeric block copolymers, the functionalized elastomeric olefin, and/or the polyamide. It appears that certain properties, such as impact strength and elongation, are sometimes enhanced by initially precompounding the PPE, elastomeric block copolymers, and the functionalized elastomeric olefin, optionally with any other ingredients, prior to compounding with the polyamide resin, however, these improvements are done at the expense of increasing the viscosity of the compatibilized composition. In the present invention, it is preferable that at least 5% by weight, preferably at least 8% by weight, and most preferably, at least 10% by weight polyamide be added with the PPE and non-polymeric carboxylic acid. The remaining portion of the polyamide is fed through a port downstream. In this manner, the viscosity of the compatibilized composition is reduced without significant reduction in other key physical properties. While separate extruders may be used in the processing, these compositions are preferably prepared by using a single extruder having multiple feed ports along its length to accommodate the addition of the various components. It is often advantageous to apply a vacuum to the melt through at least one or more vent ports in the extruder to remove volatile impurities in the composition. Those of ordinary skill in the art will be able to adjust blending times and temperatures, as well as component addition, without undue additional experimentation.

It should be clear that compositions and articles made from the compositions made by the method of this disclosure are within the scope of the invention.

The invention will be further illustrated by the following examples.

### EXPERIMENTAL

In the examples the following materials have been used:
PPE: a poly(2,6-dimethyl-1,4-phenylene ether) with an intrinsic viscosity of 45 ml/g as measured in toluene at 25°C. and a concentration of 0.6
gram per 100 ml;
PA-6,6: a polyamide-6,6 with a viscosity of 54-62 ml/g according to ASTM D789 in a solution of 8.4% by weight of nylon in 90% Formic Acid and an amine endgroup number of 42 µeq./g.;
CAH: citric acid monohydrate;
SEBS: polystyrene-poly(ethylene-butylene)-polystyrene triblock copolymer; SEP: polystyrene-poly(ethylene-propylene) diblock copolymer;
EPR-g-MAH: ethylene-propylene rubber grafted with about 0.7% by weight maleic anhydride.

The ingredients were compounded in the weight ratios as indicated in the following table in a twin-screw extruder with temperature settings over the length of the extruder between about 280 and about 310° C. The screw speed was 300 rpm, the throughput 10 kilograms per hour. All ingredients with exception of the polyamide were fed at the throat of the extruder; the polyamide was split-fed partially into the throat of the extruder with the remainder fed downstream about halfway the length of the extruder. The strands coming from the extruder were pelletized in a laboratory equipment and dried for about 3 hours at about 110°C. The dried pellets were injection molded into standard ASTM test specimens for measurement of physical properties. The ejector force was measured in KPa (psi) as the amount of force required for the ejector pins to push a molded specimen out of the injection molding tool. A lower level of force is preferred.

| Sample: | 1 | 2 | 3 | 4 |
|---|---|---|---|---|
| PPE | 20 | 20 | 20 | 20 |
| CAH | 0.85 | 0.85 | 0.85 | 0.85 |
| SEBS | 4.75 | 0 | 0 | 2 |
| SEP | 3.75 | 3 | 0 | 2 |
| EPR-g-MAH | 0 | 5 | 8 | 4 |
| PA-6,6¹ | 13 | 13 | 13 | 13 |
| PA-6,6² | 55.7 | 55.7 | 55.7 | 55.7 |
| Properties | | | | |
| HDT³ | 191 | 199 | 199 | 195 |
| NI⁴(ft lbs/in) J/m | (3.3) 176 | (2.7) 144 | (2.4) 128 | (4.1) 219 |
| Dyn.⁵ (73°F) 23°C (ft lbs) Nm | (32.3) 44 | (28) 38 | (28.8) 39 | (28.0) 38 |
| Dyn. (-20°F) -29°C (ft lbs) Nm | 4.5 | 22.2 | 14.1 | 14.0 |
| TS⁶ (KPsi) MPa | (8.99) 62 | (8.42) 85 | (9.1) 63 | (8.98) 62 |
| TE⁷ | 47 | 23 | 37 | 40 |
| FM⁸ (KPsi) MPa | (346) 2386 | (334) 2303 | (339) 2337 | (336) 2316 |
| FY⁹(KPsi) MPa | (1386) 9556 | (1283) 8846 | (1338) 9225 | (1335) 9205 |
| Ejector force (psi) KPa | (1512) | 736 | 637 | 636 |

| | | | | |
|---|---|---|---|---|
| ¹ denotes amount of PA-6,6 added with the PPE; | | | | |
| ² denotes amount of PA-6,6 added downstream; | | | | |
| ³ HDT is reported in °C and was measured at a load of 455 kpa (66 psi) as measured according to ASTM D648, | | | | |
| ⁴ NI stands for notched Izod impact reported Jm in (ft-lbs/in) and tested according to D256; | | | | |
| ⁵ Dyn. stands for Dynatup impact strength (energy to fracture falling dart test) reported in Nm (ft-lbs)and measured according to D3763; | | | | |
| ⁶ TS stands for tensile strength at yield reported in MPa (Kpsi) and measured according to ASTM D638; | | | | |
| ⁷ TE stands for tensile elongation at break reported in percent and measured according to ASTM D638; | | | | |
| ⁸ FM stands for flexural modulus and is reported in MPa (Kpsi) and measured according to ASTM D790; | | | | |
| ⁹ FY stands for flexural yield and is reported in MPa (Kpsi) and measured according to ASTM D790. All compositions contain the following additives: 0.3 weight percent Seenox 412S, 0.3 weight percent Irganox 1010, and 0.3 weight percent KI; wherein all weight are based upon the total weight of the composition. | | | | |

As can be seen from the properties of the compositions presented in the table, the compositions containing the functionalized elastomeric olefin have significantly lower ejector forces than does sample 1 that contains only an elastomeric block copolymer. A composition containing only the functionalized elastomeric olefin is illustrated by Sample 3. Compositions 2 and 4, containing both the functionalized elastomeric olefin and an . elastomeric block copolymer unexpectedly exhibited less the 50% of the ejector force of sample 1 containing only the elastomeric block copolymer. As demonstrated by the above data, use of the combination of the elastomeric block copolymer and the functionalized elastomeric olefin unexpectedly resulted in superior notched Izod impact strength as compared to sample 3 while maintaining the very low ejector force. Moreover, compositions containing only the functionalized elastomeric olefin, e.g., sample 3, unexpectedly demonstrated an inferior surface appearance as compared to composition containing both the functionalized elastomeric olefin and as elastomeric block copolymer.

## Claims

1. A method for preparing a compatibilized polyphenylene ether resin / polyamide resin composition, wherein the method comprises:
(a) melt-mixing in a first step, from 10% to less than 30% by weight polyphenylene ether resin with from 0.7% to 1.1% by weight of a non-polymeric aliphatic polycarboxylic acid or derivative thereof and from 1% to 15% by weight of at least one elastomeric block copolymer, wherein the elastomeric block copolymer is a mixture of a di-block copolymer and tri-block copolymer, wherein the copolymer comprises a polyarylene block and a saturated or unsaturated rubber block, and from 1% to 15% by weight of a functionalized elastomeric polyolefin, with from 0% to 20% by weight of a polyamide resin, and
(b) further melt mixing in a second step. from 15% to 85% of a polyamide resin;
wherein the total weight of the polyamide resin is from 35% to 85% by weight based on the total weight of the composition.

2. The method of claim 1, wherein the method is done in an extruder and wherein the first step and the second step are done sequentially in the same extruder.

3. The method of claim 1, wherein the non-polymeric aliphatic polycarboxylic acid or derivative thereof is citric acid or a hydrate of citric acid present in an amount from 0.8% to 1.0% by weight.

4. The method of claim 1, wherein the polyamide resin is a nylon-6 or a nylon-6,6 resin.

5. The method of claim 1, wherein the amount of the elastomeric block copolymer is from 1 % by weight to 8% by weight based on the weight of the entire composition.

6. The method of claim 1, wherein the amount of the functionalized elastomeric polyolefin is from 1 % by weight to 8% by weight based on the weight of the entire composition.

7. The method of claim 1, wherein the elastomeric block copolymer is a polystyrene-poly(ethylene-butylene)-polystyrene triblock copolymer, a polystyrene-poly(ethylene-propylene) diblock copolymer, or a mixture of a polystyrene-poly(ethylene-butylene)-polystyrene triblock copolymer and polystyrene-poly(ethylene-propylene) diblock copolymer.

8. The method of claim 1, wherein the elastomeric block copolymer is a mixture of a polystyrene-poly(ethylene-butylene)-polystyrene triblock copolymer and polystyrene-poly(ethylene-propylene) diblock copolymer.

9. The method of claim 1, wherein the functionalized elastomeric polyolefin is an elastomeric polyolefin containing at least one moiety of the group consisting of anhydride, epoxy, oxazoline, and orthoester.

10. The method of claim 1, wherein the functionalized elastomeric polyolefin is functionalized ethylene-propylene rubber or a functionalized ethylene-propylene-diene elastomer.

11. The method of claim 1. wherein the functionalized elastomeric polyolefin is EPR-graft-maleic anhydride or EPDM-graft-maleic anhydride.

12. The method of claim 1, wherein the ejector force is less than 50% that of the same composition not containing the functionalized elastomeric polyolefin.

13. The method of claim 1, further comprising melt mixing in the first step, at least one additive selected from the group consisting of anti-oxidants, flame retardants, drip retardants, dyes, pigments, colorants, stabilizers, antistatic agents, plasticizers, lubricants, and mixtures thereof.

14. The method of claim 1, wherein the polyamide resin has an amine endgroup to acid endgroup ratio of less than 1.0.

15. An article formed out of a composition obtained by the method of any one of claims 1-14 which has been injection molded.

## Patentansprüche

1. Verfahren zum Herstellen einer verträglich gemachten Polyphenylenetherharz/ Polyamidharz-Zusammensetzung, wobei das Verfahren umfasst:
(a) Schmelzvermischen in einer ersten Stufe von 10 bis weniger als 30 Gew.-% Polyphenylenetherharz mit von 0,7 bis 1,1 Gew.-% einer nicht-polymeren aliphatischen Polycarbonsäure oder eines Derivates davon und von 1 bis 15 Gew.-% mindestens eines elastomeren Blockcopolymers, wobei das elastemere Blockcopolymer eine Mischung eines Diblockcopolymers und eines Triblockcopolymers ist, worin das Copolymer einen Polyarylenblock und einen gesättigten oder ungesättigten Kautschukblock umfasst, und von 1 bis 15 Gew.-% eines funktionelle Gruppen aufweisenden elastomeren Polyolefins mit 0 bis 20 Gew.-% eines Polyamidharzes, und
(b) weiter Schmelzvermischen in einer zweiten Stufe von 15 bis 85% eines Polyamidharzes,
worin die Gesamtmenge des Polyamidharzes von 35 bis 85 Gew.-% beträgt, bezogen auf das Gesamtgewicht der Zusammensetzung.

2. Verfahren nach Anspruch 1, worin das Verfahren in einem Extruder ausgeführt wird und die erste Stufe und die zweite Stufe nacheinander in dem gleichen Extruder ausgeführt werden.

3. Verfahren nach Anspruch 1, worin die nicht-polymere aliphatische Polycarbonsäure oder das Derivat davon Zitronensäure oder ein Hydrat von Zitronensäure ist, die in einer Menge von 0,8 bis 1,0 Gew.-% vorhanden ist.

4. Verfahren nach Anspruch 1, worin das Polyamidharz ein Nylon-6- oder ein Nylon-6,6-Harz ist.

5. Verfahren nach Anspruch 1, worin die Menge des elastomeren Blockcopolymers von 1 bis 8 Gew.-%, bezogen auf das Gewicht der gesamten Zusammensetzung, beträgt.

6. Verfahren nach Anspruch 1, worin die Menge des funktionelle Gruppen aufweisenden elastomeren Polyolefins von 1 bis 8 Gew.-%, bezogen auf das Gewicht der gesamten Zusammensetzung, beträgt.

7. Verfahren nach Anspruch 1, worin das elastomere Blockcopolymer ein Polystyrol-Poly(ethylen-butylen)-Polystyrol-Triblockcopolymer, ein Polystyrol-Poly(ethylen-propylen)-Diblockcopolymer oder eine Mischung eines Polystyrol-Poly(ethylen-butylen)-Polystyrol-Triblockcopolymers und eines Polystyrol-Poly(ethylen-propylen)-Diblockcopolymers ist.

8. Verfahren nach Anspruch 1, worin das elastomere Blockcopolymer eine Mischung eines Polystyrol-Poly(ethylen-butylen)-Polystyrol-Triblockcopolymers und eines Polystyrol-Poly(ethylen-propylen)-Diblockcopolymers ist.

9. Verfahren nach Anspruch 1, worin das funktionelle Gruppen aufweisende elastomere Polyolefin ein elastomeres Polyolefin ist, das mindestens eine Gruppierung der Gruppe enthält, die aus Anhydrid, Epoxy, Oxazolin und Orthoester besteht.

10. Verfahren nach Anspruch 1, worin das funktionelle Gruppen aufweisende elastomere Polyolefin funktionelle Gruppen aufweisender Ethlen-Propylen-Kautschuk oder ein funktionelle Gruppen aufweisendes Ethylen-Propylen-Dien-Elastomer ist.

11. Verfahren nach Anspruch 1, worin das funktionelle Gruppen aufweisende elastomere Polyolefin EPR-Pfropf-Maleinsäureanhydrid oder EPDM-Pfropf-Maleinsäureanhydrid ist.

12. Verfahren nach Anspruch 1, worin die Auswerferkraft geringer als 50% der der gleichen Zusammensetzung ist, die das funktionelle Gruppen aufweisende elastomere Polyolefin nicht enthält.

13. Verfahren nach Anspruch 1, weiter umfassend das Schmelzvermischen in der ersten Stufe von mindestens einem Zusatz, ausgewählt aus der Gruppe bestehend aus Antioxidantien, Entflammungshemmern, das Tropfen verzögernden Mitteln, Farbstoffen, Pigmenten, Färbemitteln, Stabilisatoren, antistatischen Mitteln, Weichmachern, Schmiermitteln und deren Mischungen.

14. Verfahren nach Anspruch 1, worin das Polyamidharz ein Verhältnis von Amin-Endgruppen zu Säure-Endgruppen von weniger als 1,0 aufweist.

15. Gegenstand, geformt aus einer Zusammensetzung, erhalten durch das Verfahren nach einem der Ansprüche 1-14, der spritzgegossen wurde.

## Revendications

1. Procédé de préparation d'une composition de résine poly(phénylène éther) et de résine polyamide compatibilisées, comportant :
a) le fait de mélanger à l'état fondu, au cours d'une première étape, de 10 à moins de 30 % en poids d'une résine poly(phénylène éther) avec 0,7 à 1,1 % en poids d'un polyacide carboxylique aliphatique non polymère ou un dérivé d'un tel polyacide, 1 à 15 % en poids d'au moins un copolymère bloc élastomère, lequel copolymère bloc élastomère est un mélange de copolymère dibloc et de copolymère tribloc, le copolymère comportant un bloc polyarylène et un bloc caoutchouc saturé ou insaturé, et 1 à 15 % en poids d'une polyoléfine élastomère fonctionnalisée, ainsi qu'avec 0 à 20 % en poids d'une résine polyamide,
b) et le fait d'y mélanger à l'état fondu, au cours d'une deuxième étape; encore de 15 à 85 % en poids d'une résine polyamide,
le poids total de la résine polyamide représentant de 35 à 85 % du poids total de la composition.

2. Procédé conforme à la revendication 1, qui est mis en oeuvre dans une extrudeuse et dont la première étape et la deuxième étape sont exécutées successivement dans la même extrudeuse.

3. Procédé conforme à la revendication 1, dans lequel ledit polyacide carboxylique aliphatique non polymère ou dérivé d'un tel polyacide est de l'acide citrique ou un hydrate d'acide citrique, qui se trouve présent en une proportion pondérale de 0,8 à 1,0 %.

4. Procédé conforme à la revendication 1, dans lequel la résine polyamide est une résine de type nylon 6 ou nylon 6-6.

5. Procédé conforme à la revendication 1, dans lequel la proportion pondérale de copolymère bloc élastomère, rapportée au poids total de la composition, vaut de 1 à 8 %.

6. Procédé conforme à la revendication 1, dans lequel la proportion pondérale de polyoléfine élastomère fonctionnalisée, rapportée au poids total de la composition, vaut de 1 à 8 %.

7. Procédé conforme à la revendication 1, dans lequel le copolymère bloc élastomère est un copolymère tribloc polystyrène-poly(éthylène-butylène)-polystyrène, un copolymère dibloc polystyrène-poly(éthylène-propylène), ou un mélange d'un copolymère tribloc polystyrène-poly(éthylène-butylène)-polystyrène et d'un copolymère dibloc polystyrène-poly(éthylène-propylène).

8. Procédé conforme à la revendication 1, dans lequel le copolymère bloc élastomère est un mélange d'un copolymère tribloc polystyrène-poly(éthylène-butylène)-polystyrène et d'un copolymère dibloc polystyrène-poly(éthylène-propylène).

9. Procédé conforme à la revendication 1, dans lequel la polyoléfine élastomère fonctionnalisée est une polyoléfine élastomère qui contient au moins un élément de l'ensemble formé par les fonctions anhydride, époxy, oxazoline et orthoester.

10. Procédé conforme à la revendication 1, dans lequel la polyoléfine élastomère fonctionnalisée est un caoutchouc éthylène-propylène fonctionnalisé ou un élastomère éthylène-propylène-diène fonctionnalisé.

11. Procédé conforme à la revendication 1, dans lequel la polyoléfine élastomère fonctionnalisée est un caoutchouc éthylène-propylène avec anhydride maléique greffé ou un élastomère éthylène-propylène-diène avec anhydride maléique greffé.

12. Procédé conforme à la revendication 1, qui donne une composition pour laquelle la force d'éjection vaut moins de 50 % de celle nécessaire pour une composition identique, mais ne contenant pas de polyoléfine élastomère fonctionnalisée.

13. Procédé conforme à la revendication 1, qui comporte en outre le fait de mélanger à la masse fondue, au cours de la première étape, au moins un adjuvant choisi parmi les anti-oxydants, ignifugeants, retardateurs d'égouttement, matières colorantes, colorants, pigments, stabilisants, agents antistatiques, plastifiants et lubrifiants et leurs mélanges.

14. Procédé conforme à la revendication 1, dans lequel, dans la résine polyamide, le rapport du nombre de groupes terminaux amine au nombre de groupes terminaux acide est inférieur à 1,0.

15. Article formé en une composition obtenue par un procédé conforme à l'une des revendications 1 à 14, qui a été moulée par injection.
